# EUROPÄISCHE PATENTSCHRIFT

(11) **EP 0 470 065 B1**
(45) Veröffentlichungstag und Bekanntmachung des Hinweises auf die Patenterteilung: **01.05.1996**
(21) Anmeldenummer: 91890162.0
(22) Anmeldetag: 23.07.1991
(51) Int. Cl.: H02J 7/00, H02J 7/10

(54) **Ladegerät für Sammlerbatterien**
Accumulator-charge apparatus
Appareil de charge d'accumulateurs

(30) Priorität: 23.07.1990 AT 1540/90
(43) Veröffentlichungstag der Anmeldung: 05.02.1992
(73) Patentinhaber: INDUSTRIEELEKTRONIK PÖLZ, A-4561 Ried/Traunkreis (AT)
(72) Erfinder: Pölz, Herbert, A-4501 Neuhofen (AT)
(74) Vertreter: Hübscher, Heiner, Dipl.-Ing.

(56) Entgegenhaltungen:
- EP-A- 0 121 325
- EP-A- 0 122 473
- EP-A- 0 314 155
- EP-A- 0 349 995
- DE-A- 3 325 029
- DE-A- 3 434 916
- DE-U- 9 010 972
- GB-A- 2 159 671
- GB-A- 2 226 715
- US-A- 4 387 332

## Beschreibung

Die Erfindung betrifft ein Ladegerät für Sammlerbatterien nach dem Oberbegriff des Patentanspruches 1.

Ein derartiges Ladegerät ist aus der EP-A 0 121 325 bekannt. Bei diesem bekannten Gerät, das für die Aufladung gleicher, hermetisch abgeschlossener Nickel-Kadmiumbatterien bestimmt ist, die gegebenenfalls verschiedene Kaparitäten aufweisen können, wird abhängig vom Ladezustand ein hoher oder ein niedriger Ladestrom vorgegeben, es ist aber keine feinstufigere Anpassung des Ladestromes an den momentanen Aufladezustand vorhanden.

Ein ähnliches, für die gleichzeitige Aufladung mehrerer Batterien bestimmtes Ladegerät ist aus der EP-A 0 314 155 bekannt. Es wird dabei angestrebt, die Batterien unter möglichst gleichmäßiger Belastung eines Versorgungsnetzes und Ausnützung des günstigeren Nachtstromes aufzuladen, wobei die Länge der Ladeimpulse entsprechend der erforderlichen Nachladung der einzelnen Batterien und der Kapazität dieser Batterien verteilt wird. Eine Vorgabe der Stromstärke bei den einzelnen Aufladeimpulsen ist nicht vorgesehen.

Aus der GB-A 2 159 671 ist es bekannt, für mehrere örtlich getrennte Aufladestationen für Batterien, die z.B. in einem Werksgelände entsprechend den dortigen Bedürfnissen verteilt sind, eine zentrale Überwachungs- und Steuerungseinrichtung vorzusehen, welche die Aufladevorgänge an den einzelnen Stationen überwacht, die Aufladeströme beim Überschreiten vorgegebener Sollwerte begrenzt und überdies in der Lage ist, Aufzeichnungen über die einzelnen Ladevorgänge durchzuführen und zu speichern, um so die zentrale Überwachung dieser Vorgänge zu verbessern.

Nach der DE-A 3 434 916 ist bei einer Ladeschaltung für eine Sammlerbatterie eine Meßschaltung zum Messen der Batteriespannung vorgesehen, die eine Zweiweggleichrichterschaltung aus Thyristoren in der Weise steuert, daß bei einer niederen Batteriespannung nur ein kleiner Teil der Speisespannungshalbwellen durchgelassen wird und der durchgelassene Anteil der Speisespannungshalbwellen mit zunehmender Batteriespannung zunimmt. Überschreitet die Spannung der Batterie die Nennspannung, dann werden beide Thyristoren der Ladeschaltung gesperrt. Diese wird aber wieder eingeschaltet, wenn die Batteriespannung auf einen bestimmten Wert abgesunken ist.

Es ist in dem letztgenannten Fall ähnlichen Schaltungen auch bereits bekannt, die Güte einer Batterie nach der Zeitdauer zu klassifizieren, die zwischen dem Erreichen eines oberen Grenzwertes nach der dann erfolgten Abschaltung des Ladestromes bis zum Erreichen eines unteren Grenzwertes vergeht. Andere Aussagen über den Batteriezustand kann man durch Messung der Säuredichte erhalten.

An sich hängt die Lebensdauer einer Batterie nicht nur von den Betriebsbelastungen, die meist nicht beeinflußt werden können, sondern wesentlich von der Einhaltung besonderer Bedingungen beim Aufladevorgang ab, wobei nicht nur grundsätzliche Unterschiede im Verhalten von Blei- und Nickel-Kadmium-Batterien vorhanden sind, sondern auch Unterschiede im Plattenaufbau und der Art des verwendeten Elektrolyten maßgeblichen Einfluß haben.

In manchen Fällen werden in Aufladestationen relativ lange Kabelanschlüsse zwischen dem Gerät und den Batterien notwendig, wobei aufgewickelte, lange Kabel bei hohen Stromstärken eine beträchtliche Induktivität aufweisen, die den Ladevorgang beeinträchtigen kann.

Aufgabe der Erfindung ist die Schaffung eines Ladegerätes, das eine möglichst schonende und an die jeweilige Batterie angepaßte Aufladung auch älterer Bleibatterien ermöglicht, dabei an den Aufladezustand und den Erhaltungszustand der Batterie angepaßt werden kann und auch relativ große Längen von Anschlußkabeln zuläßt.

Die gestellte Aufgabe wird durch die Merkmale des Patentanspruches 1 gelöst. Auch hier kann man durch Erfassung der zwischen dem Erreichen eines oberen Grenzwertes und dem Absinken auf den unteren Grenzwert vergehenden Zeit Rückschlüsse auf die Güte der Batterie treffen. Jedenfalls können durch die gesetzten Maßnahmen auch ältere Batterien noch bis zur oberen Grenze ihrer tatsächlichen Kapazität aufgeladen werden. Eine besonders vorteilhafte Weiterbildung ist im Anspruch 2 angegeben.

Eine Anpassung des jeweils vorgegebenen Wertes des Ladestromes unabhängig von Einflüssen der Leitungseigenshaften der Kabel wird durch eine Ausführung gemäß Anspruch 3 ermöglicht.

Bei Geräten für mehrere Batterien wird der Betrieb und die Überwachung durch eine Weiterbildung gemäß Anspruch 4 erleichtert.

Schließlich ermöglicht es die Ausführung nach Anspruch 5, verschiedenste Batterien mit dem gleichen Gerät jeweils unter den für die jeweilige Batterie günstigsten Bedingungen aufzuladen.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: ein erfindungsgemäßes Gerät im einpoligen Blockschaltschema,
- Fig. 2: ein detaillierteres Schaltschema des dem Rechner zugeordneten, für alle Batterieanschlüsse gemeinsamen Teiles des Meß- und Regelkreises und
- Fig. 3: ein detaillierteres Schaltschema des einer Einzelbatterie zugeordneten Teiles des Meß- und Regelkreises.

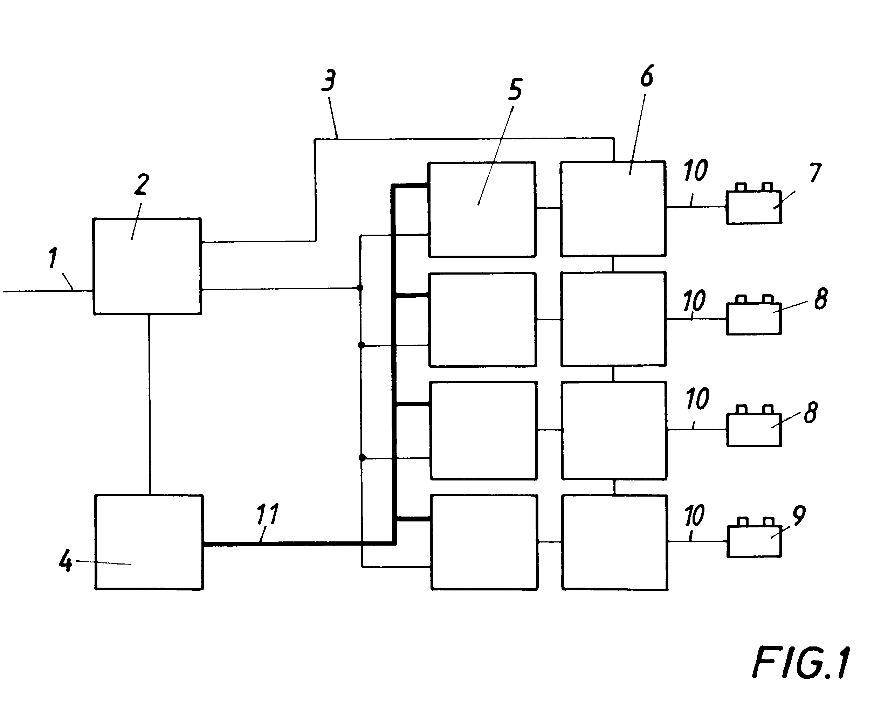

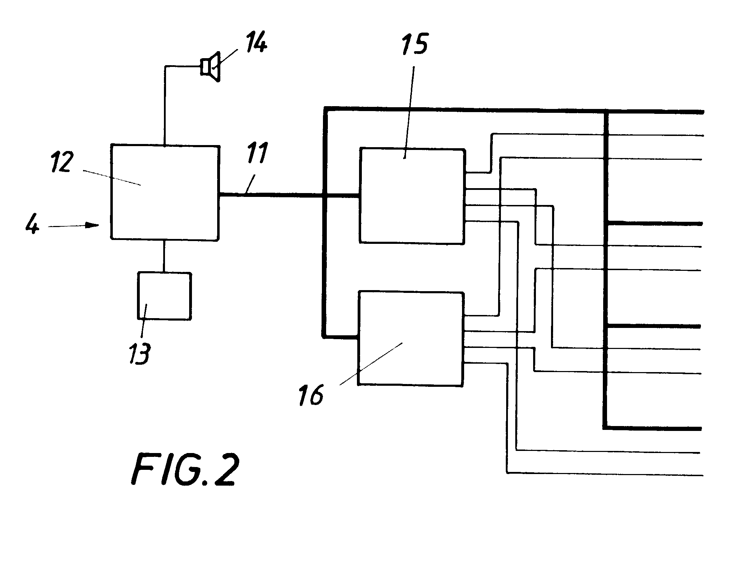

Nach Fig. 1 besitzt das Gerät einen z.B. über eine Leitung 1 an ein Wechselstromnetz angeschlossenen Stromversorgungsteil 2 mit Gleichrichter- oder Umformerstation zur Erzeugung eines über eine Leitung 3 abgegebenen Lade-Gleichstromes und zur Versorgung einer zentralen Steuereinheit 4 sowie von Meß- und Regelstufen 5, 6 für Einzelbatterien 7, 8, 9, die über Steckanschlüsse und Kabel 10 an die Leistungsregelstufen 6 angeschlossen werden können. Die zentrale Steuereinheit 4 ist mit den Stufen 5, 6 über einen Datenbus 11 verbunden und erhält einerseits von den einzelnen Batterien in noch zu beschreibender Weise Meßsignale über den Momentanzustand der angeschlossenen Batterien 7 - 9 und gibt anderseits Steuersignale an die Meß- und Regelstufen 5, 6 ab. Im einzelnen besteht die zentrale Steuereinheit 4 aus einem Rechner 12 mit integriertem Speicher und integriertem Taktgeber, einen sogenannten Watchdog 13 und einem optischen oder akustischen Alarmsignalgeber 14 (siehe Fig. 2). Der Watchdog 13 überwacht den korrekten Programmablauf. Ist dieser durch Blitzschlag, Netzstörungen oder Spannungsspitzen gestört, so schaltet der Watchdog 13 die Meß- und Regelstufen ab und unterbricht dadurch die Stromzufuhr zu den Batterien. Ferner ist eine Moduladressierungseinrichtung 15 und ein A/D-Wandler 16 vorgesehen, um der Meß- und Regeleinrichtung 5, 6 den Batterieanschlüssen zugeordnet über den Datenbus 11 Regeldaten zuzuführen und von den Batterien 7 - 9 geordnet Meßdaten über die momentane Batteriespannung empfangen zu können.

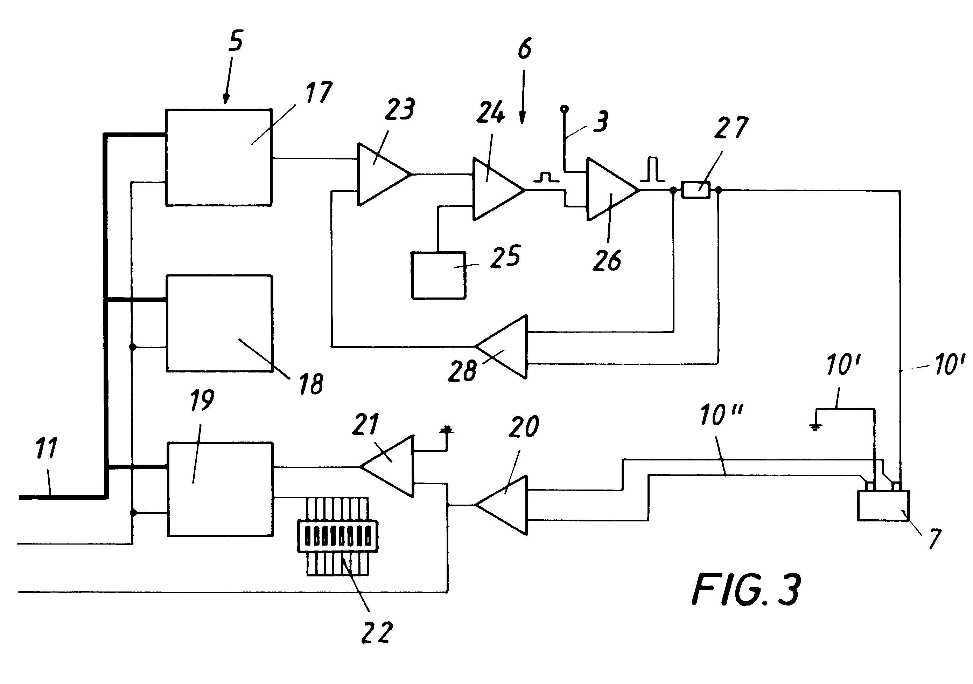

Jede Meß- und Regelstufe 5 bzw. 6 besitzt nach Fig. 3 einen D/A-Wandler 17. Für die über den Datenbus 11 und die Adresseneinrichtung 15 vom Rechner 12 her zugeführten Regeldaten, eine Anzeigeeinrichtung 18 für die der angeschlossenen Einzelbatterie, z.B. 7, zuzuordnenden Daten, z.B. Batterieart, Batterienennspannung, Batteriepolung und Aufladezustand der Batterie, wobei auf der Anzeigeeinrichtung allen diesen Daten verschiedenfarbige Leuchtdioden zugeordnet sein können, und eine als Zwischenspeicher dienende Haltestufe 19.

Jede Batterie, z.B. 7, liegt über gesonderte Anschlußleitungen 10' und eine nicht dargestellte Steckverbindung an Leistungs-Anspeiseleitungen des Gerätes und ist über Meßleitungen 10˝, die an beide Pole der Batterie 7 anschließen, ebenfalls mit dem Gerät verbunden. Die Meßleitungen 10˝ führen zu einem Spannungswandler 20. Die in den Meßleitungen auftretenden Spannungsmeßwerte werden über einen Polaritätsprüfer 21 der Haltestufe 19 für den periodischen Abgriff durch den Rechner 12 zugeleitet. Mit Hilfe von zusätzlichen Schaltern oder sonstigen Programmiereinrichtungen 22 sind Eingriffe in das Rechnerprogramm bzw. Einstellungen des Geräteanschlusses für die jeweilige Batterie auf verschiedene Batteriespannungen, Batteriekapazitäten oder Batteriearten sowie auf verschiedene Aufladeprogramme möglich. Ergibt die Spannungsmessung eine falsche Polung der angeschlossenen Batterie oder einen Batteriekurzschluß, so wird dies über 18 angezeigt und gegebenenfalls über 14 ein Alarm ausgelöst. Ein Alarm über 14 kann auch ausgelöst werden, wenn ein (nicht dargestellter) Überstrom- oder Spannungswächter einen Kurzschluß in einer der Hauptleitungen bzw. eine starke Über- oder Unterspannung im Versorgungsnetz oder einen Blitzschlag feststellt. Hier kann zusätzlich das Gerät abgeschaltet und eine Wiedereinschaltsperre, die nur von Hand aus gelöst werden kann, eingelegt werden.

Soweit es für die vorliegende Erfindung von Interesse ist, genügt es auszusagen, daß Meßdaten jeder Batterie periodisch im Takt des Taktgebers auf den Rechner 12 abgefragt werden, wobei, wem. die ersten Messungen ergeben, daß die Batterie 7 aufladefähig ist, also die richtige Nennspannung besitzt, keinen inneren Kurzschluß aufweist und in der richtigen Polung mit für die Aufladung genügend geringem Übergangswïderstand der Anschlußklemmen (kein Wackelkontakt) angeschlossen ist, der Rechner auf Grund der Spannungsmeßwerte und dem für die Batterieart vorgegebenen Programm in seinem Speicher einen dem Meßwert zugeordneten Sollwert ermittelt und diese Sollwertdaten über den Datenbus 11 dem D/A-Wandler 17 zuführt, der ein dem Sollwert entsprechendes Analogsignal an den einen Eingang eines Reglers 23 legt. Der Regler ist mit einem Impulsgenerator 25 verbunden, der über ein Regelglied 24 gesteuert wird und Steuer-Rechteckimpulse auf den einen Eingang eines Impuls-Stromreglers 26 legt, wobei der andere Eingang dieses Reglers an der Versorgungsleitung 3 liegt. Das Impulsdauer-Pausenverhältnis kann beispielsweise 4 : 1 s betragen. Die Stromstärke der Impulse hängt vom eingegebenen Sollwert ab. Unmittelbar nach dem Impulsstromregler 26 ist in die Versorgungsleitung 10′ eine Meßstrecke 27 eingeschaltet und der in die Leitung 10′ eingespeiste Iststrom wird (über den Spannungsabfall) an 27 gemessen, wobei dieser Meßwert über eine Anpassungsschaltung 28 an den zweiten Eingang des Reglers 23 gelegt wird, der im Sinne einer Nachführsteuerung, sein Ausgangssignal soweit verändert, daß schließlich der Iststrom mit dem vorgegebenen Sollstrom übereinstimmt.

Während des Ladevorganges wird die Batteriespannung dauernd gemessen und dieser Meßwert wird alle 50 ms auf den Rechner abgefragt, der dem Meßwert zugeordnete, gegebenenfalls veränderte Werte zur Steuerung des Reglers 23 ausgibt und schließlich, wenn die Batterie 7 ausreichend geladen ist, die weitere Aufladung unterbricht, die Batterieüberwachung aber aufrecht erhält. Möglichkeiten der Programmgestaltung für den Aufladevorgang wurden in der allgemeinen Beschreibung ausführlich angegeben.

Die Aufladung während des Ladevorganges wird unterbrochen, wenn ein vorgegebener, höherer oberer Grenzwert der Batteriespannung erreicht ist. Sinkt in weiterer Folge die Batteriespannung auf einen ebenfalls vorgegebenen unteren Grenzwert ab, dann wird über die Regeleinrichtung die Aufladung neuerlich eingeleitet. Als Beispiel sei angegeben, daß man bei einer Bleibatterie mit 12 V Nennspannung den unteren Grenzwert mit 13,6 V, den höheren oberen Grenzwert mit 14,55 V und den niedrigeren oberen Grenzwert mit 14,1 V wählen kann, wobei die Steuerlogik zwischen Abschaltungen beim höheren oberen Grenzwert eine wenigstens zehnfache Anzahl, z.B. 50 Abschaltungen, des Aufladevorganges beim Erreichen des niedrigeren oberen Grenzwertes vorgibt. Der höhere obere Grenzwert ist etwas höher als jener Wert, der eine volle Aufladung der Batterie anzeigt.

## Patentansprüche

1. Ladegerät für Sammlerbatterien (7 - 9) mit einem Versorgungskreis (2 - 6) mit Ladestromregler (6) und Kabelanschlüssen (10) für die Pole wenigstens einer Sammlerbatterie, wobei der Ladestromregler (6) als Impulsregler ausgebildet ist und einen Meß- und Regelkreis mit einer Meßschaltung (4, 19, 20, 27) zur Erfassung des momentanen Aufladezustandes der Batterie und einem Sollwertgeber (4, 17) aufweist, der über einen Rechner (4) zu jedem erfaßten, dem momentanen Aufladezustand entsprechenden Meßwert nach Speichertabellen und/oder Algorithmen unterschiedlich hohe Sollwerte für die Stromstärke der von Pausen unterbrochenen Ladestromimpulse auswählt und vorgibt, dadurch gekennzeichnet, daß für die beiden Pole jeder aufzuladenden Batterie (7 - 9) gesonderte Meß- und Anspeiseleitungen (10, 10', 10") mit zugehörigen Anschlüssen am Gerät vorgesehen sind und die Meßleitungen (10") mit dem Meß- und Regelkreis verbunden sind, daß im Regelkreis für die von der Meßschaltung (4, 19, 20) erfaßte Klemmenspannung der am Ladegerät angeschlossenen Batterie (7) ein unterer Grenzwert und zwei obere Grenzwerte vorgebbar sind und daß eine Steuerlogik des Regelkreises den Aufladevorgang intermittierend beim Erreichen des einen oder anderen oberen Grenzwertes unterbricht, bis die Klemmenspannung auf den unteren Grenzwert absinkt.

2. Ladegerät nach Anspruch 1, dadurch gekennzeichnet, daß die Steuerlogik zwischen Abschaltungen beim höheren, oberen Grenzwert eine wenigstens zehnfache Anzahl, z.B. 50, Abschaltungen des Aufladevorganges beim Erreichen des niedrigeren oberen Grenzwertes vorgibt.

3. Ladegerät nach den Ansprüchen 1 und 2, dadurch gekennzeichnet, daß dem Ladestromregler (5, 6, 17, 23 - 26) ein Fühler (27) zur Istwerterfassung des Ladestromes unmittelbar nachgeordnet und im Ladestromkreis (10) eine Nachführ-Steuerstufe (23) zur Anpassung des vom Ladestromfühler (27) erfaßten Istwertes an den vorgegebenen Sollwert vorgesehen ist.

4. Ladegerät nach einem der Ansprüche 1 - 3, dadurch gekennzeichnet, daß am Gerät jedem Anschluß für eine Einzelbatterie (7 - 9) Anzeigeeinrichtungen (18) für den momentanen Aufladezustand, Kontaktrehler der Batterieanschlüsse und Batteriekurzschluß zugeordnet sind.

5. Ladegerät nach einem der Ansprüche 1 - 4, dadurch gekennzeichnet, daß Eingabe- und Stelleinrichtungen (22) zur Einstellung bzw. Programmierung des Gerätes bzw. des Meß- und Regelkreises auf verschiedene Batteriespannungen und Batteriearten vorgesehen sind.

## Claims

1. A charger for storage batteries (7, 9) comprising a supply circuit (2 - 6) with a charging current regulator (6) and cable connections (10) for the terminals of at least one storage battery, the charging current regulator (6) being constructed as a pulse regulator and comprising a measuring and automatic control circuit containing a measuring circuit (4, 19, 20, 27) for detecting the instantaneous charging state of the battery and also comprising a set-value transmitter (4, 17) which, via a computer (4), selects and sets varying values for the strength of the intermittent charging current pulses in accordance with stored tables and/or algorithms in accordance with each detected measured value corresponding to the instantaneous charging state, characterised in that separate measuring and supply lines (10, 10', 10") with associated connections are provided on the charger for the two poles of each battery (7 - 9) for charging, and the measuring lines (10") are connected to the measuring and automatic control circuit, in that a lower limiting value and two upper limiting values can be preset in the automatic control circuit for the terminal voltage, detected by the measuring circuit (4, 19, 20), of the battery (7) connected to the charger, and in that a control logic in the automatic control circuit intermittently interrupts the charging process on reaching one or other upper limiting value, until the terminal voltage falls to the lower limiting value.

2. A charger according to claim 1, characterised in that the control logic, between switching-off operations at the higher, upper limiting value, presets at least ten times the number, e.g. 50, switching-off operations of the charging process on reaching the smaller upper limiting value.

3. A charger according to claims 1 and 2, characterised in that a sensor (27) for detecting the actual value of the charging current is disposed directly after the charging current regulator (5, 6, 17, 23 - 26) and a follow-up control stage (23) is disposed in the charging current circuit (10) in order to adapt the actual value, detected by the charging current sensor (27), to the preset value.

4. A charger according to any of claims 1 to 3, characterised in that devices (18) for displaying the instantaneous charging state, contact faults in the battery connections and battery short-circuits, are associated with each connection for an individual battery (7 - 9) on the charger.

5. A charger according to any of claims 1 to 4, characterised in that input and adjusting devices (22) are provided for adjusting or programming the charger or the measuring and automatic control circuit to various battery voltages and kinds of battery.

## Revendications

1. Appareil de charge pour des accumulateurs (7 à 9), avec un circuit d'alimentation (2 à 6) équipé d'un régulateur de courant de charge (6) et des raccordements par câble (10) pour les pôles d'au moins un accumulateur, le régulateur de courant de charge (6) étant réalisé sous forme de régulateur à impulsions et présentant un circuit de mesure et de régulation avec un circuit de mesure (4, 19, 20, 27) destiné à appréhender les états de charge instantanés de la batterie et présentant un transducteur de valeurs de consigne (4, 17), qui, par l'intermédiaire d'un ordinateur (4), pour chaque valeur de mesure appréhendée correspondant à l'état de charge instantané, sélectionne et alloue, selon des tableaux mis en mémoire et/ou des algorithmes, des valeurs de consigne, quantitativement différentes, de l'intensité du courant des impulsions de courant de charge interrompues par des pauses, caractérisé en ce que, pour les deux pôles de chaque batterie (7 à 9) à charger, sont prévues sur l'appareil des lignes de mesure et d'alimentation (10, 10', 10") séparées, équipées de raccordements afférents et les lignes de mesure (10") étant reliées au circuit de mesure et de régulation, en ce que, dans le circuit de régulation de la tension aux bornes, appréhendée par le circuit de mesure (4, 19, 20), de la batterie (7) raccordée à l'appareil de charge peuvent être allouées une valeur limite inférieure et deux valeurs limites supérieures, et en ce qu'une logique de commande du circuit de régulation fait cesser de façon intermittente le processus de chargement, lors de l'atteinte de l'une ou de l'autre des valeurs limites supérieures, jusqu'à ce que la tension aux bornes soit redescendue à la valeur limite inférieure.

2. Appareil de charge selon la revendication 1, caractérisé en ce que la logique de commande alloue, entre des mises hors circuit, dans le cas où l'on a la valeur limite supérieure la plus haute, un nombre d'au moins une dizaine, par exemple 50, de mises hors circuit du processus de charge, lors de l'atteinte de la valeur limite supérieure la plus basse.

3. Appareil de charge selon les revendications 1 et 2, caractérisé en ce qu'un capteur (27) destiné à appréhender la valeur réelle du courant de charge est disposé directement en aval du régulateur de courant de charge (5, 6, 17, 23 à 26), et un étage de commande à poursuite (23), destiné à assurer l'adaptation entre la valeur réelle, appréhendée par le capteur de courant de charge (27), et la valeur de consigne prédéterminée est prévu dans le circuit de courant de charge (10).

4. Appareil de charge selon l'une des revendications 1 à 3, caractérisé en ce que des dispositifs d'affichage (18) destinés à afficher l'état de charge instantané, les défauts de contact des raccordements de batterie et les courts-circuits de batterie sur l'appareil sont associés à chaque raccordement destiné à une batterie d'accumulateur (7 à 9) individuelle.

5. Appareil de charge selon l'une des revendications 1 à 4, caractérisé en ce que des dispositifs d'introduction et de réglage (22) sont prévus pour assurer le réglage, respectivement la programmation de l'appareil respectivement du circuit de mesure et de régulation, pour différents états de fonctionnement et différents types de batteries.
